# EUROPEAN PATENT SPECIFICATION

(11) **EP 3 337 441 B1**
(45) Date of publication and mention of the grant of the patent: **24.07.2019**
(21) Application number: 16760409.9
(22) Date of filing: 19.08.2016
(51) Int. Cl.: A61H 9/00, A61H 23/02, G06F 3/01

(54) **HAPTIC STIMULATION APPARATUS**
HAPTISCHE STIMULATIONSVORRICHTUNG
APPAREIL DE STIMULATION HAPTIQUE

(30) Priority: 19.08.2015 GB 201514721
(43) Date of publication of application: 27.06.2018
(73) Proprietor: Morgan Innovation & Technology Ltd, Petersfield, Hampshire GU32 3QA (GB)
(72) Inventor: QUEST, James, Petersfield Hampshire GU32 3AQ (GB); SMITH, Stephen Paul, Petersfield Hampshire GU32 3QA (GB); PAWLAK, Adam, Petersfield Hampshire GU32 3QA (GB); CLARKE, Howard Morgan, Petersfield Hampshire GU32 3QA (GB); METCALF, Cheryl Diane, Southampton Hampshire SO45 2PJ (GB)
(74) Representative: Boynton, Juliette Alice
(86) International application number: PCT/EP2016/069746
(87) International publication number: WO 2017/029406

(56) References cited:
- EP-A1- 2 839 821
- CN-A- 1 411 793
- US-A1- 2009 048 547
- US-A1- 2014 276 270

## Description

### Introduction

The present invention relates to haptic stimulation in therapy, particularly for the treatment of stroke patients, and to apparatus and methods of use thereof. The apparatus can also be used in simulations, for example training, and in the gaming industry.

### Background to the Invention

Damage to the brain, for example as a result of stroke or trauma, can lead to total or partial paralysis and sensory disorders of the limbs and hands. Such patients have to undergo extensive rehabilitation and in some cases are able to regain or improve movement and/or feeling.

Rehabilitation typically involves physiotherapy, including the use of repetition of movements, where this is possible.

It is also known to apply various stimulation to the limb of the patient, typically to the patient's hand. It is believed that the application of sensory stimulation to an affected part of the body results in significantly improved neurological outcomes from an ischemic or haemorrhagic injury.

US 2013/0018289, in the name of Nussbaun, describes a post-stroke stimulation device including a garment, in particular a glove, which includes separated devices for applying stimulation to the skin of the stroke patient. The stimulation applied may be pressure, vibration or temperature.

EP 2810635, in the name of Apolet, also describes a sensory stimulation device for a patient with brain damage. The device is a hand held device, with zones for placement of the fingers, with stimulation being applied to the zones. The stimulation is applied by a rotating eccentric cam, and the temperature of the zones can also be varied.

US 2013/0041296 in the name of Forschungszentrum Juelich GmbH, describes another device for treating patients using vibration, tactile or thermal stimulation. The specification describes the frequency at which the stimulation should be applied, generally in the range of 1 to 60 Hz, and the duration of the stimulation.

JP 2011/188921, in the name of Panasonic Elec Works Co Ltd, describes apparatus for providing vibration or massaging. The types of waves and their frequency are described. Typically the device uses a sine wave at 25 - 40 Hz and 200 - 250 Hz depending on the massage effect to be achieved. There is no indication that this could be used for stimulation for stoke patients, and no feedback is described.

WO 2014/163740, in the name of Passy-Muir Inc., describes systems and methods for stimulating swallowing. The device provides vibration stimulation at between 30 and 60 Hz.

EP 2 839 821 A1, in the name of Li, discloses a a pressure bandage comprising a pressure sensor which is set in the bandage and electrically connected with a CPU, and a micro air pump which is electrically connected with the CPU; a protective pad set in the pressure bandage and equipped with electrodes, a temperature sensor, a vibrating motor, and a cold-hot transducer mounted on the motor.

There exists thus a need for alternative or improved devices that can be applied to a patient's hand of other part of their body, to provide stimulation to aid rehabilitation.

### Summary of the Invention

The invention provides apparatus for providing stimulation to a user. The stimulation may be provided according to a random or pre-programmed pattern. The stimulation may alternatively be provided in coordination with a visual stimulation, e.g. on a screen. The visual stimulation may be provided in response to some movement from the user (patient).

Accordingly, the invention provides a transducer for applying stimulation to a user, comprising a housing holding:-
a Peltier device for providing heating and/or cooling,
an inflatable chamber having a diaphragm for applying pressure to the user, the air pocket having a pneumatic air inlet and outlet, and
a linear resonance actuator (LRA) or eccentric rotating mass (ERM) for providing vibration
wherein the Peltier device is located approximately centrally on the diaphragm with a top surface of the Peltier device designed to be in contact with a user and a bottom surface located on the diaphragm.

In use, the invention provides in a single and compact device, sources of these three different types of stimulation (temperature, pressure and vibration), which can all be applied to a single localized area of a user (patient) in therapy. In examples of its use stroke patients, in rehabilitation, are treated by application to one or more fingers of combinations of these stimulatory inputs. The stimulation is suitably accompanied by visual stimulation that corresponds to the temperature, pressure and/or vibration from the transducer, this combination being found to provide improved treatment of rehabilitating patients over the long term.

The inflatable chamber can be any air tight device, for example an air pocket. The diaphragm is provided in order to transfer the pressure from the inflatable chamber to the user and comprises any element adapted to transfer the pressure from inflation of the chamber.

A linear resonance actuator (LRA) or eccentric rotating mass (ERM) are suitably used for providing vibration. These can be provided in small enough format to be borne on a finger without being cumbersome.

In embodiments described in more detail below, the vibration source, e.g. the LRA or ERM is held within the air pocket. This assists in reducing the overall device size.

The transducer generally includes rigid support structure on which the various components are located and held together in a single device. As also shown in an embodiment described below, the vibration source is preferably attached to a rigid portion of this structure, enabling the vibration to be transmitted through the structure to the user, despite the vibration source being optionally distal from the user's body part, typically a finger, to which the transducer is applied. A strap can then secure the transducer to the body with sufficient force for the vibration to be sensed on the body.

Many of the patterns generated are based around providing a burst of a standard square wave between 4 KHz and 30 KHz in frequency with pauses between each burst. Preferably the bursts have a frequency of 10 KHz to 20 KHz and more preferably between 15 KHz and 20 KHz. The most preferred frequency is about 20 KHz. The frequency of the bursts can vary from 0.1 Hz to 350Hz depending on the stimulation required. More preferably the frequency of the burst can vary from 80 - 350 Hz. For example, to mimic a smooth surface one uses a high frequency and the higher this value is, the smoother the surface appears. Using frequencies over 100Hz provides this smooth sensation. For example frequencies in the range of 100 - 350 Hz, preferably 150 - 300 Hz, most preferably 200-300 Hz are used. To provide a sensation corresponding to rough surfaces, a frequency of up to around 100Hz is used, for example in the range 1 - 100 Hz, preferably 50 - 100 Hz and most preferably 80 - 100 Hz. The lower the frequency used the more significant undulations can be perceived by the patient. Variation in frequency provides stimulation of the mechanoreceptors at the appropriate stages.

The Peltier device is located approximately centrally on the diaphragm. This also assists in reducing the overall size. There need be sufficient area of diaphragm only to mount the Peltier device, with a top surface of the Peltier device designed to be in contact with the user and a bottom surface located on the diaphragm. The Peltier device can thus be proximal to the user, with the diaphragm distal. Hence, movement of the diaphragm to apply pressure is transmitted by this pressure urging the top surface of the Peltier device against the user. Temperature change is transmitted as the Peltier device surface is held directly against the user.

Typically a thermistor will be associated with the Peltier device. Using thermistors the ambient temperature can be monitored. Temperature stimulation uses this as a reference to provide about a 10°C increase when heating and about 10°C decrease for cooling. The reason for this is to provide a sense of relative temperature change to the fingertip as instead of applying an exact value of temperature.

For safety reasons the maximum temperature range is generally 2°C - 45°C. Outside of this temperature range there is a risk of causing damage to the skin.

The reservoir pressure for the air pocket and diaphragm will usually be between about 3psi and 9psi (between about 20 and 62 kPa). Air pockets will only ever reach a maximum which is equalized in an associated pressure circuit. This happens in an apparatus of the invention when the tubing to the air pockets is switched into the circuit via the use of valves, e.g. via solenoids. The volume of air generally remains the same and therefore the pressure reduces across the circuit; in embodiments this reduction was to approximately 2psi (13.8 kPa) less than the original reservoir pressure.

In a specific device made and tested, the solenoid switches open for 1 second to allow the air pocket to inflate in less than 1 second. To provide a controlled inflation over 2 seconds the solenoid is fired frequently for a 10ms period every 100ms. Although this has a multiple step change in pressure, as it is performed at a fast rate it provides the perception to the user of a gradual pressure change.

In preferred embodiments a temperature change is used in combination with a pressure increase. This is because it has been found that a temperature change is better perceived by patients when accompanied by an increase in pressure.

In preferred embodiments, the transducer(s) is(are) sized for securement to the pad of a user's finger. An adjustable strap can cater for finger size variation.

Transducers herein may also comprise a motion tracking sensor. This is optionally one or more of accelerometers, magnetometers, gyroscopes and compasses.

Transducers herein such as bend sensors may also comprise a material which changes resistance as it bends.

Therapeutic uses of the transducers are further provided. The invention hence also provides a stimulation device for a patient, comprising:-
a plurality of transducers of the invention, optionally comprising one or more or all optional and preferred features as described elsewhere, each transducer mounted on a housing and having means for securement to a patient;
a corresponding plurality of pneumatic tubing for connection to the inlets and outlets of the inflatable chambers and wiring for the Peltier devices and
the vibration source, e.g. LRA/ERM; and
a controller connectable to the plurality of transducers and including:
   a plurality of ports for connection of pneumatic tubing to the transducers;
   a plurality of ports for connection of power supply wiring to the transducers;
   a power supply; and
   a microcontroller for controlling the operation of the transducers.

The plurality of transducers in the device usually comprise at least two transducers sized for securement to the fingers of a user. Such devices are to be used for therapy of stroke patients in which stimulation is applied to the fingers of a hand in combination with coordinated visual stimuli.

The plurality of transducers of this system may further include an additional transducer comprising a Peltier device and an LRA or ERM. The pressure generating element may be absent, as this additional transducer may be connected to a finger or part of the body to which it cannot be firmly secured, with the result that the element for applying pressure cannot reliably be used,

A strap to secure the tubing and wiring to the body or the user is suitably included. Also optional is a bag, e.g. a shoulder bag for holding the controller and, further, a vdu connectable to the microcontroller.

As explained above, therapy using the transducer(s) in combination with visual effects is an aspect of the invention. The device further can include a microcontroller that coordinates a combined stimulation from the transducer(s) and the vdu. For example, the controller can control the vdu to display images and activate the transducers independently.

In certain embodiments, the microcontroller is adapted to detect movement and display images on the vdu relating to detected movement. Hence, a coordinated stimulation is provided.

A patient stimulation method of the invention comprises:-
attaching a plurality of transducers of the invention or of the stimulation device of the invention to a patient; and
providing stimulation to the patient through the transducers.

The stimulation is preferably provided in a predetermined pattern. The method can include providing images on the vdu corresponding to the pattern of stimulation provided.

Feedback from the patient is further contemplated. Therefore it is a feature of embodiments of the invention that methods includes the step of detecting movement by the patient, and then optionally adapting the output of the device, e.g. providing images on the vdu corresponding to the movement detected. In one example of use in therapy, the images displayed exaggerate the detected movement - this is found to aid the patient's response to the device and to promote greater reaction to the stimulation over a prolonged period of therapy.

To help understanding of the invention, specific embodiments thereof will now be described by way of example and with reference to the accompanying drawings, in which:
Fig. 1 shows a schematic cross section of a transducer according to the invention and a patient's finger;
Fig. 2 shows a schematic cross section of a transducer according to a second embodiment of the invention and a patient's finger;
Fig. 3 shows a schematic cross section of a transducer according to a third embodiment of the invention and a patient's finger;
Fig. 4 shows a schematic cross section of a transducer according to a fourth embodiment of the invention and a patient's finger;
Fig. 5 shows a plurality of devices as shown in Figs. 1-4, on a hand of a user;
Fig. 6 shows a hand of a user attached to which is a transducer according to Fig. 4; and
Fig. 7 shows a schematic control system for controlling a plurality of transducers according to the invention.

The device uses an array of transducers which are attachable to a user on various parts of the body, particularly the hands. Each transducer can provide stimulation in the form of all of pressure, vibration and temperature change.

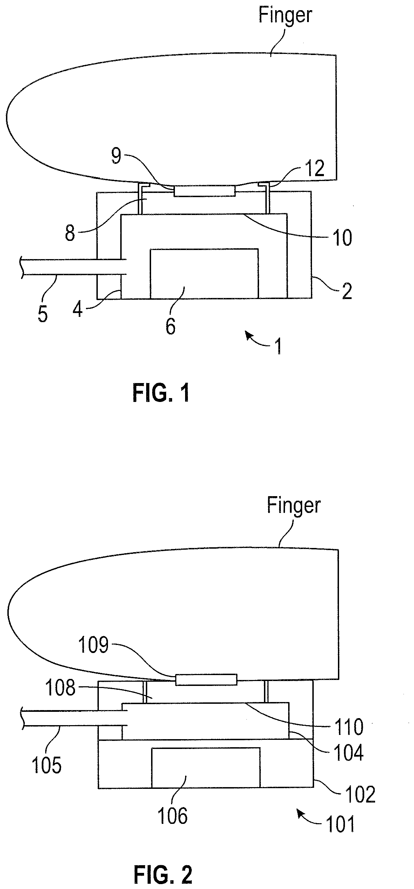

Figure 1 shows a transducer 1 for the application of stimulation to an area of a finger of a user. The transducer comprises a housing 2 holding an air pocket 4, having an inlet 5, for the application of pressure, a linear resonance actuator (LRA) or an eccentric rotating mass (ERM) 6 for providing vibration and a Peltier device 8 for creating a change in temperature.

In the embodiment shown in Figure 1, the air pocket 4 comprises an area within the housing over which a diaphragm 10 is stretched. The LRA or ERM 6 is held within the air-pocket 4 and against the housing 2. This is space-saving and the air pocket also acts to protect the LRA or ERM 6. In addition, this arrangement facilitates communication of a distal vibration signal from 6 via the rigid structural components of the housing that can be sensed by the user.

The Peltier device 8 is attached to the diaphragm 10 above the air pocket 4 such that as the air pocket is inflated, the Peltier device is urged against a user, especially against a pad of the finger. This provides a hard surface which is urged against the user when the air pocket is inflated, creating a stronger feeling of pressure for a user. A thermistor 9 is provided on the Peltier device to detect the temperature and to ensure that any increase or decrease in temperature resulting from the Peltier device does not exceed the safe range for skin, namely 2°C - 45°C.

As shown in Fig. 1, in this embodiment, the Peltier device 8 and its associated thermistor 9 are held within a slot 12 within the housing 2 which is slightly deeper than the Peltier device. The vertical movement of the Peltier device 8 is thus being limited by the depth of the slot. This arrangement enables pressure to be applied to the skin by movement of the Peltier device, providing the skin with a firm source of pressure, namely the hard surface of the Peltier device. The limited movement of the Peltier device 8 within the slot 12 provides a suitable sensation of pressure to the user, without any possibility of providing excess pressure and causing patient injury.

In typical use a plurality of such devices 1 are held at different positions against the skin of a user.

Where the use is for the treatment of stroke patients, or other patients with sensory disorders, individual devices 1 may be attached to for example their fingers, using e.g. Velcro or elastic attachment. Individual devices may then be connected to a central controller (as discussed later). Velcro straps are particularly suitable as they can be adjusted to ensure a snug fit which varies according to finger sizes.

Where the use is gaming or training/simulation, a plurality of the devices 1 may be connected into or onto an item of clothing, for example a glove. Patients suffering from sensory disorders will typically not be able to put on a glove and thus the provision of a modular system described above is indicated for this disability. However, under particular circumstances where they are able to put on a glove, this can also be used in the treatment of such patients.

In an alternative embodiment shown in Figure 2, the ERM 106 is not held within the air pocket 104, but held underneath the air pocket 104 within the housing 102. The air pocket 104 is provided with air inlet 105. As described previously, the Peltier device 108 and associated thermistor 109 are attached to the diaphragm 110 which forms the top surface of the air pocket 104 for application of pressure against the user. As shown the Peltier device is not held within a slot but is free to move with the air pocket as it expands.

Again this device 101 may be attached to a user using Velcro straps, or by incorporation into clothing.

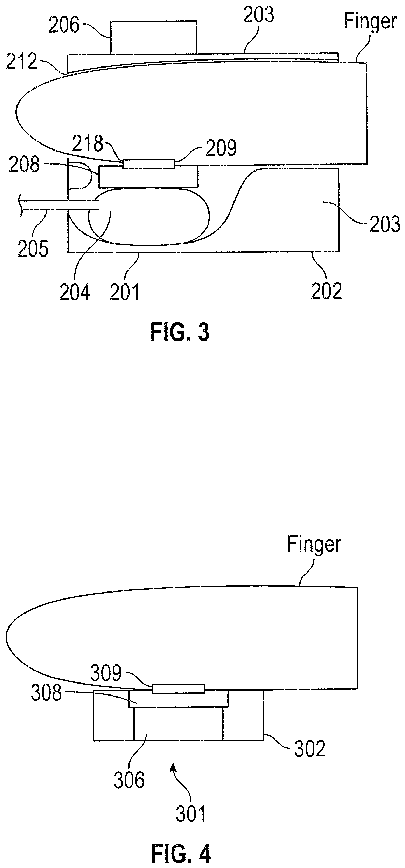

In a further embodiment 201 shown in Figure 3 for use on fingers only, the housing is in the form of a cap with closed end, e.g. a thimble 202 into which a user can place an end of a finger. The thimble 202 may have a small opening at end 212 so that the tip of the finger, including the tip of the finger nail can protrude.

In this device 201, the ERM/LRA 206 is provided on the diametrically opposite side of the device to the air pocket 204, with pneumatic inlet 205, and Peltier device 208 and thermistor 209. The EMR/LRA is positioned to act against the nail of the finger of the user, while the air pocket, on which is mounted the Peltier device 208 and thermistor 209, is positioned to act against the pad 218 of the finger. The thimble will have a hard plastic over cover 202 and a lining of silicon 203, or other flexible plastic material, into which the air pocket and Peltier device are set.

While the combination of vibration, pressure and temperature can be used to provide a range of stimulation to a user, a device in which there is no ability to provide pressure is also provided. Such a device 301 will be useful in positions where it cannot be held sufficiently tightly against the body for an increase in pressure to be felt for example when used on the palm of the hand. Such a device is shown in Figure 4, and as in the previous devices includes a Peltier device 308 for changing the temperature, a thermistor 309 for measuring the temperature and an LRA/ERM 306 for the application of vibration, both provided within a housing 302. As before the device may be held in place using a Velcro strap, not shown, or incorporated into clothing.

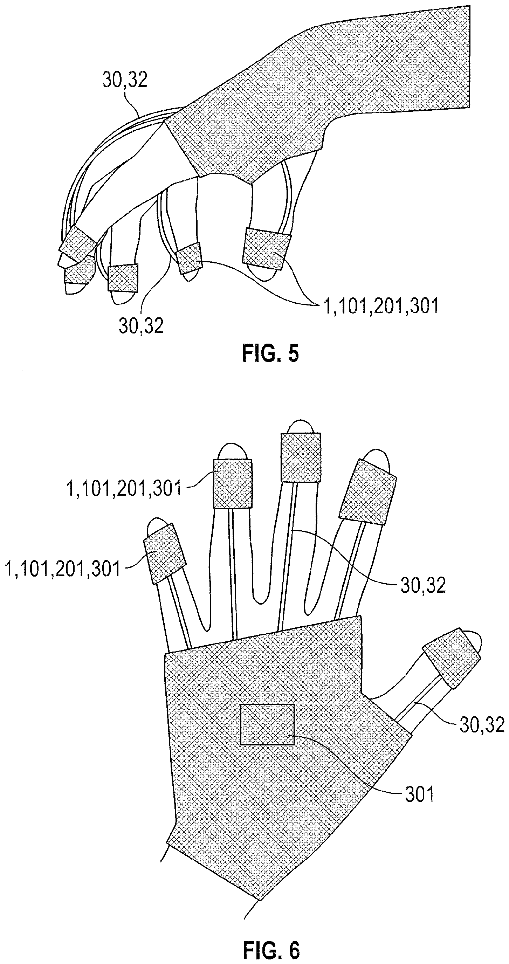

For use on a stroke patient, as shown in Figure 5 a plurality of these devices 1, 101, 201, 301 will be connected together for fitting to a user in a modular arrangement.

For use in applying stimulation to the hand, typically 5 devices 1, 101, 201 as described above are applied to the fingers, including the thumb. In addition, a further device 1, 101, 201, or 301 is provided for attachment to the palm. The device is provided against the muscle adjacent the thumb. Typically this device excludes the option of the application of pressure.

Each of the devices has a power connection 30, and a pneumatic connection 32 where appropriate, for connection to a power source 34, and for a pneumatic system 36. The pneumatic system may be a closed loop pressurized reservoir system with the flow of the air from the pneumatic system into each device being controlled by a solenoid 38. These in turn are connected to a microcontroller 40, which controls the activation of the stimulation in the transducers 1, 101, 201, 301.

The wires 30 and tubes 32 from the devices 1, 101, 201, 301 may be provided within woven sheath to keep them together and protect them from damage. Alternatively the may be held to the user with Velcro straps or allowed to drape.

As shown in Figure 6, the arrangement may include a wrist strap which can be used to hold all of the wires and tubes against the wrist of the user to increase comfort, prevent tangling and reduce the likelihood of them being disconnected.

In an alternative, the transducers can be placed within an item of clothing, typically a glove, with all of the wires and tubes fixed to the item of clothing.

The power source 34, pneumatic system 36, solenoid 38 and microcontroller 40 may be provided in a bag (not shown) for ease of use. The bag may be a shoulder bag or a back pack for wearing by the user, or may be a hand bag for containing these elements together. In another embodiment, not shown, these elements are attached to the forearm of the patient using straps.

For the treatment of stroke patients the stimulation may be applied independently of any other activity, for example when the patient is going about their normal routine, or when they are watching the television. As set out above the treatment is by application of combinations of pressure, temperature increase and/or decrease and vibration.

The pressure is applied by inflation of the air pocket 4, 104, 204. As described above, a Peltier device 8, 108, 208 is attached to a diaphragm 10, 110, 210 on the top of the air pocket and by inflating the air pocket, the Peltier device is urged again the limb of the patient wearing the device 1, 101, 201.

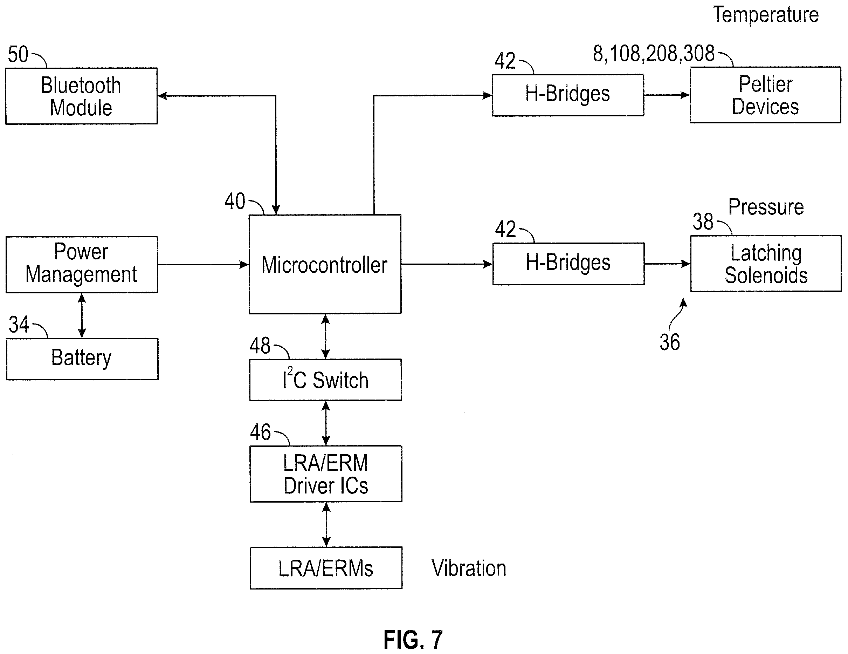

As shown in Figure 7, the arrangement of control system is such that the microcontroller 40 controls the release of a predetermined amount of air from the pneumatic system 36 into an air pocket using a solenoid 38. At least one solenoid is associated with each device 1, 101, 201, such that each device can be controlled separately. The pneumatic system may be a closed loop pressurized reservoir system.

Typically the solenoids may be latching solenoids 38 and may be controlled by the microcontroller 40 via an H-bridge driver IC 42. The advantage of using such a system is that a short pulse of power to the latching solenoid will switch it to "latch on" mode, which will hold the pressure within the air pocket, unless released or leakage failure, without the need to constant application of power. This reduces power consumption, extending the life of the battery. Typically the power pulse to switch the solenoid to "latch on" will be 10-15ms.

To release the pressure from the device the solenoid can be switched to "latch off" mode, but a further pulse of power, again of a duration of approximately 10-15ms. To switch the solenoid to "latch off" mode, the polarity of the power source applied is the opposite to that applied to achieve "latch on" mode. Switching to "latch off" mode exhausts that air pocket through the solenoids exhaust outlet.

Using this system the pressure in each device 1, 101, 201 can be controlled separately to achieve the same or different pressures, and to hold the pressure for the same or different time periods.

The temperature stimulation is applied using the Peltier device 8, 108, 208, 308, which is a thermoelectric device that generates the presence of heating or cooling at an electrified junction of two different conductors. Thus when the Peltier device is driven in one direction, it produces a heating process on one surface and a cooling process on the other surface; similarly when the Peltier device is driven in the opposite direction, it produces a cooling effect on the first surface (which had previously been heated) and a heating effect of the other surface. When no current is passed through the device, it returns to the ambient temperature. Thus if such a device is placed against the skin of a patient, the upper surface can be heated or cooled, or allowed to remain at ambient temperature dependent on the current flow through the device. This is again achieved using an H-bridge and driver ICs 44 controlled by the microcontroller.

The vibration is generated by creating different waveforms to simulate different everyday sensations (for example typing or a cat), using a LRA or ERM.

The LRA comprises a small disc containing a small mass, a wire coil, a spring and a permanent magnet. When a current is passed through the coil it generates a magnetic field, which moves the mass causing a vibration to be generated.

The ERM comprises a small motor with an off-centre mass connected to its shaft. When this rotates a vibration is generated.

Different vibration waveforms, created by driving the LRA or ERM in different ways, using pulse width modulation, can be used to simulate different sensations. Different sensations can be simulated by driving different waveforms to these LRA and ERM devices. The LRA/ERM is controlled by a drive IC 46, which may be programmed to control them to generate in excess of 100 different waveforms. Communication between the microcontroller 40 and the ICs 46 is via I²C switch 48. All the driver ICs have the same I²C address, so they are all connected via an I²C switch 48.

The microcontroller 40 in turn may be controlled from a computer (not shown). This may be in the form of a smart phone or tablet, using Bluetooth 50 to communicate.

In some embodiments motion sensing may also be provided on the transducers. These may be in the form of a combination of accelerometers and magnetometers, gyroscopes and compasses which can provide position and orientational information. Such device may be provided on the transducers 1, 101, or may be provided on the straps which are used to hold the transducers in position. In other embodiments the motion sensing devices may be incorporated into the item of clothing, where this is used to hold the transducers against the body of a user. In addition a strip of material which changes resistance when bent may be provided for securement to a user's fingers, for detecting bending of the finger.

In an alternative, a motion tracking system such as Leap Motion or Wii motion may be used.

To provide stimulation to a user, different levels and combinations of the pressure, vibration and temperature are used to create different effects. These can be used whether the apparatus is being used to treat stroke patients, for user for training or games.

The skin contains four types of mechanoreceptors which are used to detect touch in different ways, and use of the three types of stimulation in the device 1, 101, 201 all four types of mechanoreceptors can be activated. Two are fast receptors and two are slow receptors. Their details are as follows:-

| **Name** | **Reaction to:** | **Type** |
|---|---|---|
| Meissner's corpuscles | Touch, pressure (dynamic) | Fast |
| Pacinian corpuscles | Deep pressure, vibration (dynamic) | Fast |
| Merkel's disks | Touch, pressure (static) | Slow |
| Ruffini's corpuscles | Stretching of skin | Slow |

The skin also contain thermoreceptors which react to changes in temperature.

As discussed above, pressure is applied by the inflation of an air pocket via a solenoid, the air pocket inflating in less than 1 second. This enables rapid inflation of the air pocket.

Alternative, the solenoid can be pulsed on and off at a fast rate such that only a fraction of the air needed to inflate the air pocket is allowed through during each "on" phase. As a result the air pocket can be filled slowly, or only partial filling of the air pocket can be achieved, resulting in the application of a lower pressure.

Typically the reservoir pressure will be between 3psi and 9psi. This will enable a significant amount of pressure to be provided to a user, or any level of pressure desired.

Thermistors are used to prevent the Peltier device from increasing or decreasing the temperature of the skin by more than 10°C from ambient temperature. The thermistors form part of a hardware controlled safety circuit that monitors the ambient skin temperature on the back of the hand. There is a thermistor positioned between the Peltier device and the fingertip to monitor the stimulation temperature. Assuming ambient temperature to be 25°C this will ensure that the no damage to the skin will result.

Generally the Peltier device will be used to change the temperature of the skin by up to 3°C, either up or down, in less than 2 seconds, and by up to 10°C in less than 5 seconds. It has been found that there is a better temperature change perception when pressure is applied at the same time.

The vibration stimulation can be used to create the largest number of different effects on the skin.

An LRA can be vibrated with pulse width modulation (PWM) pulses, self-defined waveforms or pre-defined waveforms, determined by the drive IC, and the form can be chosen to create different effects.

An un-calibrated system can be driven with a standard square wave up between 4 KHz and 20 Hz, with a duty cycle of 20-50%. For example a single "click" sensation can be created using a short burst of 10-100ms, containing the square wave. Similarly a "double click" sensation can be achieved by creating two bursts of approximately 20-100ms duration, with a gap of approximately 75 - 500ms between them. A "hum" could be created using a long burst of the square wave.

The performance and efficiency of the LRAs can be improved with slight changes to the waveforms. This may also give slight changes to the sensations created. The waveform now consists of periodic bursts (of 20KHz square wave). The frequency of these bursts can be a rate of between 80-350Hz. Each burst being approximately 3.4ms in duration.

Varying the duration of each burst and the intervals between them can also give the sensation of the vibration ramping (speeding) up and down.

For use with patients the apparatus can be used in either a passive mode or an active mode.

In passive mode the apparatus is attached to the hand of a user and stimulation applied irrespective on any response made by the user. Pre-programmed patterns of stimulation can be applied to the user which can be chosen by a doctor, physiotherapist or other practitioner, or the user themselves. Generally in this mode the sensory neural pathways only will be stimulated and not the motor pathways. In particular the stimulation will be directed to the Pacinian corpuscles, which lie deep within the skin. As treatment progresses other sensory receptors may be targeting by using the device to simulate light touch, pressure, stretching and temperature change. This mode would be used in patients who have severely affected sensory perception and/or motor impairment.

In active mode the apparatus provides active feedback to information provided in a screen, for example a TV, PC, or tablet. In this mode the microcontroller 40 will be connected to a computer, for example a PCT or tablet. This may be wired or wireless. As discussed above, this may be via a Bluetooth module 50. The computer will in turn be connected to the screen as describe, and again this may be wired or wireless. This mode requires active participation from the patient who will be provided with sensory feedback appropriate to the activity shown on the screen. The user will experience a tailored virtual environment, whereby the physical movement a user is capable of in the real world may be accentuated to produce an exaggerated visual representation for the virtual world, and will include all the appropriate sensory feedback via the transducers, to provide an immersive and realistic environment. This mode is useful for patients with moderate to minor sensory perception and motor impairment.

A system of "goal-setting" may be built into the virtual environment, whereby when a user can consistently achieve a goal set for him, the difficulty will be increased. This ability to manipulate the parameters of an environment is specific to virtual environments and is very useful for the rehabilitation of patients. In addition, providing an engaging, adaptable environment for patients and "gamifying" their rehabilitation makes seemingly repetitive therapy an enjoyable and motivating experience, thus providing the intensity to promote sensorimotor neuroplasticity that is required for recovery.

The device can be used for training in a very similar way to the active mode set out above.

### Evaluation Study

An evaluation study has been carried out on a number of unimpaired participants using the device as set out above providing sensations to the thumb, fingers and palms. All participants were right handed and the device was attached to their right hand. The age range of the participants was 26 - 58, with a male: female ratio of 1:3.

### Haptic device evaluation

The haptic device was attached to the participant's right hand providing sensations to the volar aspect of the palm, distal phalanx of the thumb, index, middle and little fingers.

Four distinct phases were completed during the evaluation:
Phase 1: Did you feel something? And, what did you feel? This phase was designed to test whether the participant could feel the type of sensation applied by the haptic device. Table 1 below shows the sequence of testing:

| | | | | |
|---|---|---|---|---|
| Index | Vibration | Pressure | Cold | Hot |
| Thumb | Hot | Vibration | Cold | Pressure |
| Little | Pressure | | | |
| Middle | Cold | Hot | Pressure | Vibration |
| Palm | Vibration | Cold | Hot | |

Phase 2: Using the vibration haptic actuator, we adjusted the frequency and amplitude in order to determine perceptual thresholds of the devices. Three profiles (click, buzz, hum) were pre-programmed at three amplitudes (low, medium and high).
Phase 3: Static sensory testing: The hand was held as if holding a cylinder such as a drinking cup. The haptic devices were activated according to a set sensory profile of combined sensations chosen with the aim of mimicking a range of objects (hot mug, tennis ball, cold can, clay pot, woven basket, empty tin, glass of water, wooden pencil pot). Participants were asked to describe the sensations initially using free language. They were then provided with a prompt sheet of descriptive words to help focus their descriptions. Finally, participants were asked to describe the sensations with reference to photographs of several objects (see full study protocol in Appendix A). The participant was unaware that the intended object was depicted on the photograph sheet.
Overall, the outcome from this phase was to ascertain:
How much the participant feels like they are interacting with an actual object when using the device? If the stimulation feels like interacting with any of the objects pictured and why?
Participants were then asked to repeat the process, but this time while moving their fingers and hand position. The exact protocol of free language description, word prompt sheet and visual prompt sheet were again used.
Phase 4: Dynamic sensory testing to replicate surface texture of objects: Haptic sensations (vibration profiles) were applied whilst the participant moves their index finger horizontally as if exploring the surface of a table. Sensations were applied that were intended to mimic sandpaper, corrugated cardboard and rattan. Participants were also instructed to repeat the movements slowly and fast in order to assess whether or not this changes perception. This process was then repeated while the participant moved their index finger vertically, as if touching the surface of a wall.

### Summary of Results

- Phase 1: For the individual sensations, vibration was always perceived although some people had difficulty locating a place of origin on the hand/fingers. Pressure was generally accurately perceived but some people also felt a sensation of rushing air. Pressure, in this phase, was often described as a flick or a squeeze. Hot/cold were less reliably perceived but helped by combining them with pressure.
- Phase 2: Many people couldn't feel the low amplitude in any of the 3 frequencies. The results from this phase were hugely variable. People perceived sensation to be originating from different fingers, or even in the space between the fingers or in the palm. Wearers were able to distinguish between mid-high amplitudes, and they could feel that high was stronger.
- Phase 3 Stationary: The inclusion of temperature, when coupled with a suitable visual prompt, leads the wearer to associate the sensation with a specific object (hot mug/cold coke can). The perception of temperature fading was reported as feeling unrealistic by some wearers, but others thought that it was akin to a thin metal where you transfer your own heat to it, so become less aware of the surface temperature.
Vibration was the most contentious sensation with primarily two dichotomous outcomes; wearers whose responses were 'objects don't vibrate', to wearers who related vibration to a surface texture. Some participants found the inclusion of vibration as unpleasant.
The profile of the woven basket often resulted in a perception of a dynamic interaction, where an object contained moving liquid, or there was something moving within it. This object was often described as being pliable whereas, the clay pot and the glass of water sensations were often described as solid objects.
- Dynamic: Wearers found the addition of moving the hand and fingers as changing the perception from 'there's something in my hand' to 'there can't be because my fingers wouldn't be able to pass through it'. Other feedback concluded that objects that were initially perceived as solid changed to pliable by introducing movement. When moving the hand from supination to pronation, wearers indicated that they could feel the weight of an object being held.
- Phase 4: Sandpaper - increasing or decreasing speed was not an important factor in determining the surface texture of the virtual object. The surface texture was perceived as consisting of small undulations or bumps. It was reported to be most like the corrugated cardboard to wearers. A resistance to slip or friction was also reported. Direction of movement did not impact perception.
Cardboard - regular undulations were perceived, but reportedly too subtle to be the corrugations on the cardboard. Leather or woollen fabric was often identified instead. Niggles, dimples, dots, etc., were repeatedly used to describe this sensation. Speed seemed to be more important to perception, but direction did not.
Rattan - there was less uniformity that the [last one] 'corrugated cardboard'. This sensation was less consistently identified as a single surface, but texture was definitely present. Wearers were more convinced of the sensation when moving vertically, and then able to correlate it to a woven basket.

### General comments:

Auditory: The majority of wearers commented on the sound of the device influencing their perception of the virtual objects to the extent that they were unsure if the sensation was physical or auditory in origin. Some suggested wearing headphones or playing music to disguise the noise. However, coupling physical sensations, irrespective of auditory influences, with a more realistic virtual environment, i.e. a game, were reported possibly as being more like grasping an object.

Physical: Some people were aware of a constant light vibration during wear, which would indicate some feedback from the cabling (but may also be a factor of the noise on occasion). The wrist support also affected the movement available and realism of the interaction with the virtual objects. The cabling on the back of the hand was also reported as restricting the movement. Some wearers reported missing the sensation on the ring finger.

Influencers: People were particularly intrigued by the warm and cold sensations. Coupling the temperature with the pressure sensation seemed to be the most realistic sensation akin to feeling an object. Preliminary results suggest that the dynamic Phase 4 surface textures are promising for interacting with a virtual world.

### Conclusions

This study has concluded as follows:
- The device produces realistic sensations based on the combination of vibration, pressure and temperature and manipulation of these to create texture, i.e. sandpaper, corrugated cardboard and rattan at least are effective.
- The inclusion of temperature has the most potential for generating a realistic interaction within a virtual world.
- Surface texture was most convincing during dynamic exploration.

Thus this evaluation has demonstrated that the device can provide realistic stimulation for stroke patient and create realistic sensations for use in virtual simulators.

## Claims

1. A transducer for applying stimulation to a user, comprising a housing (2) holding:
a Peltier device (8) for providing heating and/or cooling,
an inflatable chamber (4) having a diaphragm (10) for applying pressure to the user, the inflatable chamber (4) having a pneumatic air inlet and outlet (5), and
a linear resonance actuator (LRA) or eccentric rotating mass (ERM) (6) for providing vibration
wherein the Peltier device (8) is located approximately centrally on the diaphragm with a top surface of the Peltier device (8) designed to be in contact with a user and a bottom surface located on the diaphragm.

2. A transducer as claimed in claim 1 wherein the LRA/ERM is held within the inflatable chamber (4).

3. A transducer as claimed in claim 1 or claim 2, further including a thermistor (9) for temperature measurement.

4. A transducer as claimed in any one of claims 1-3, wherein the transducer is sized for securement to the pad of a user's finger.

5. A transducer as claimed in any one of claims 1-4, further including a motion tracking sensor.

6. A transducer as claimed in claim 5, wherein the sensor for motion tracking is selected from one or more of accelerometers, magnetometers, gyroscopes, compasses.

7. A transducer as claimed in any preceding claim, further including a material which changes resistance as it bends.

8. A stimulation device for a patient, comprising:
a plurality of transducers as claimed in any one of claims 1-7, each transducer (1) mounted on a housing and having means for securement to a patient;
a corresponding plurality of pneumatic tubing (32) for connection to the inlets and outlets of the inflatable chambers and wiring for the Peltier devices and
the LRA/ERM; and
a controller connectable to the plurality of transducers and including:
a plurality of ports for connection of pneumatic tubing to the transducers;
a plurality of ports for connection of power supply wiring to the transducers; a power supply; and
a microcontroller (40) for controlling the operation of the transducers.

9. A stimulation device as claimed in claim 8, wherein the plurality of transducers comprises at least two transducers sized for securement to the fingers of a user.

10. A stimulation device as claimed in claim 8 or claim 9, wherein the plurality of transducers further includes an additional transducer comprising a Peltier device and an LRA or ERM.

11. A stimulation device as claimed in any one of claims 8-10 further including a strap to secure the tubing and wiring to the body or the user.

12. A stimulation device as claimed in any one of claims 8-11, further including means for attaching the controller to a forearm of a user.

13. A stimulation device as claimed in any one of claims 8-12 further including a vdu connectable to the microcontroller.

14. A stimulation device as claimed in claim 13, wherein the microcontroller is adapted to control the vdu to display images and activate the transducers independently.

15. A stimulation device as claimed in claim 14, wherein the microcontroller is adapted to detect movement and display images on the vdu relating to detected movement.

## Patentansprüche

1. Wandler zum Anlegen von Stimulation an einen Nutzer, umfassend ein Gehäuse (2), welches beinhaltet:
eine Peltier-Vorrichtung (8) zum Bereitstellen von Erwärmung und/oder Kühlung,
eine aufblasbare Kammer (4) mit einer Membran (10) zum Anlegen von Druck an den
Nutzer, wobei die aufblasbare Kammer (4) einen pneumatischen Lufteinlass und -auslass (5) aufweist; und
einen linearen Schwingungserreger (LSE) oder exzentrische rotierende Masse (ERM) (6) zum Bereitstellen von Vibration,
wobei die Peltier-Vorrichtung (8) sich ungefähr zentral auf der Membran befindet, wobei eine obere Oberfläche der Peltier-Vorrichtung (8) so konzipiert ist, dass sie im Kontakt mit einem Nutzer und einer auf der Membran befindlichen unteren Oberfläche ist.

2. Wandler nach Anspruch 1, wobei der LSE/die ERM in der aufblasbaren Kammer (4) gehalten wird.

3. Wandler nach Anspruch 1 oder Anspruch 2, ferner enthaltend einen Thermistor (9) zur Temperaturmessung.

4. Wandler nach einem der Ansprüche 1 bis 3, wobei der Wandler zur Sicherung an der Fläche eines Fingers des Nutzers größenbemessen ist.

5. Wandler nach einem der Ansprüche 1 bis 4, ferner enthaltend einen Bewegungsverfolgungssensor .

6. Wandler nach Anspruch 5, wobei der Sensor zur Bewegungsverfolgung ausgewählt ist aus einem oder mehreren von Beschleunigungsmessern, Magnetmessern, Gyroskopen, Kompassen.

7. Wandler nach einem der vorstehenden Ansprüche, ferner enthaltend ein Material, das beim Biegen den Widerstand ändert.

8. Stimulationsvorrichtung für einen Patienten, umfassend:
eine Vielzahl von Wandlern nach einem der Ansprüche 1 bis 7, wobei jeder Wandler (1) an einem Gehäuse montiert ist und Mittel zur Sicherung an einem Patienten aufweist; eine entsprechende Vielzahl an pneumatischen Leitungen (32) zur Verbindung mit den Einlässen und Auslässen der aufblasbaren Kammern und Verkabelung für die Peltier-Vorrichtungen und den LSE/die ERM; und
eine Steuerung, die mit der Vielzahl von Wandlern verbunden werden kann und enthält: eine Vielzahl von Ports zur Verbindung von pneumatischen Leitungen an die Wandler;
eine Vielzahl von Ports zur Verbindung der Leistungszufuhrverkabelung an die Wandler; eine Leistungszufuhr; und
eine Mikrosteuerung (40) zum Steuern des Betriebs der Wandler.

9. Stimulationsvorrichtung nach Anspruch 8, wobei die Vielzahl von Wandlern mindestens zwei Wandler umfasst, die zur Sicherung an den Fingern eines Nutzers größenbemessen sind.

10. Stimulationsvorrichtung nach Anspruch 8 oder Anspruch 9, wobei die Vielzahl von Wandlern ferner einen zusätzlichen Wandler enthält, umfassend eine Peltier-Vorrichtung und einen LSE oder eine ERM.

11. Stimulationsvorrichtung nach einem der Ansprüche 8 bis 10, ferner enthaltend einen Streifen zum Sicherung der Leitungen und Verkabelung an den Körper oder den Nutzer.

12. Stimulationsvorrichtung nach einem der Ansprüche 8 bis 11, ferner enthaltend Mittel zum Anbringen der Steuerung an einen Unterarm eines Nutzers.

13. Stimulationsvorrichtung nach einem der Ansprüche 8 bis 12, ferner enthaltend eine VDU, die mit der Mikrosteuerung verbunden werden kann.

14. Stimulationsvorrichtung nach Anspruch 13, wobei die Mikrosteuerung angepasst ist, um die VDU zu steuern, um Bilder anzuzeigen und die Wandler unabhängig zu aktivieren.

15. Stimulationsvorrichtung nach Anspruch 14, wobei die Mikrosteuerung angepasst ist, um Bewegung zu detektieren und Bilder auf der VDU anzuzeigen, die sich auf die detektierte Bewegung beziehen.

## Revendications

1. Transducteur pour l'application d'une stimulation à un utilisateur, comprenant un boîtier (2) contenant :
un dispositif Peltier (8) assurant le chauffage et/ou le refroidissement,
une chambre gonflable (4) possédant un diaphragme (10) pour l'application d'une pression à l'utilisateur, la chambre gonflable (4) possédant une entrée et une sortie d'air pneumatique (5), et
un actionneur à résonance linéaire (LRA) ou une masse rotative excentrique (ERM) (6) pour assurer une vibration, le dispositif Peltier (8) étant situé approximativement au centre du diaphragme, avec une surface supérieure du dispositif Peltier (8) conçue pour être au contact avec un utilisateur, et une surface inférieure située sur le diaphragme.

2. Transducteur selon la revendication 1, le LRA/ERM étant maintenu au sein de la chambre gonflable (4).

3. Transducteur selon la revendication 1 ou la revendication 2, comprenant en outre une thermistance (9) pour la mesure de la température.

4. Transducteur selon une quelconque des revendications 1 à 3, le transducteur étant dimensionné pour être fixé sur la pulpe du doigt d'un utilisateur.

5. Transducteur selon une quelconque des revendications 1 à 4, comprenant en outre un capteur de suivi du mouvement.

6. Transducteur selon la revendication 5, le capteur de suivi du mouvement étant sélectionné parmi un des suivants : accéléromètres, magnétomètres, gyroscopes, compas.

7. Transducteur selon une quelconque des revendications précédentes, comprenant en outre un matériau changeant de résistance lorsqu'il se plie.

8. Dispositif de stimulation pour un patient, comprenant :
une pluralité de transducteurs selon une quelconque des revendications 1 à 7, chaque transducteur (1) étant monté sur un boîtier, et possédant un dispositif pour la fixation sur un patient ;
une pluralité correspondante de tubes pneumatiques (32) pour le raccordement aux entrées et aux sorties des chambres gonflables, et le câblage pour les dispositifs Peltier et le LRA/ERM ; et
un dispositif de commande raccordable à la pluralité de transducteurs, et comprenant :
une pluralité d'orifices de raccordement de tubes pneumatiques aux transducteurs ;
une pluralité d'orifices pour le raccordement de câbles d'alimentation électrique aux transducteurs ;
une alimentation électrique ; et
un microcontrôleur (40) assurant le contrôle du fonctionnement des transducteurs.

9. Dispositif de stimulation selon la revendication 8, la pluralité de transducteurs comprenant au moins deux transducteurs dimensionnés pour la fixation sur les doigts d'un utilisateur.

10. Dispositif de stimulation selon la revendication 8 ou la revendication 9, la pluralité de transducteurs comprenant en outre un transducteur additionnel comprenant un dispositif Peltier ainsi qu'un LRA ou un ERM.

11. Dispositif de stimulation selon une quelconque des revendications 8 à 10, comprenant en outre une sangle pour fixer les tubes et les câbles au corps ou à l'utilisateur.

12. Dispositif de stimulation selon une quelconque des revendications 8 à 11, comprenant en outre un dispositif pour la fixation du dispositif de commande sur l'avant-bras d'un utilisateur.

13. Dispositif de stimulation selon une quelconque des revendications 8 à 12, comprenant en outre un dispositif d'affichage pouvant être raccordé au microcontrôleur.

14. Dispositif de stimulation selon la revendication 13, le microcontrôleur étant adapté pour commander au dispositif d'affichage l'affichage d'images et l'activation des transducteurs indépendamment.

15. Dispositif de stimulation selon la revendication 14, le microcontrôleur étant adapté pour détecter un mouvement et afficher sur le dispositif d'affichage des images relatives au mouvement détecté.
